# EUROPÄISCHE PATENTSCHRIFT

(11) **EP 1 914 094 B1**
(45) Veröffentlichungstag und Bekanntmachung des Hinweises auf die Patenterteilung: **09.12.2009**
(21) Anmeldenummer: 07020400.3
(22) Anmeldetag: 18.10.2007
(51) Int. Cl.: B60D 1/64, H01R 13/627

(54) **Schnellverbindungselement**
Rapid connection element
Elément de raccordement rapide

(30) Priorität: 19.10.2006 DE 202006016234 U
(43) Veröffentlichungstag der Anmeldung: 23.04.2008
(73) Patentinhaber: VBG GROUP TRUCK EQUIPMENT GmbH, 47807 Krefeld (DE)
(72) Erfinder: Wensing, Udo, 46145 Oberhausen (DE); Hahnen, Hans Boris, 47475 Kamp-Lintford (DE); Neumeyer, Frank, 47877 Willich (DE); Frentzen, Frank, 41749 Viersen (DE); Birkenbach, Rolf, 47809 Krefeld (DE); Roßbach, Joachim, 41747 Viersen (DE)
(74) Vertreter: DR. STARK & PARTNER

(56) Entgegenhaltungen:
- WO-A-2005/028220
- DE-U1- 9 317 302
- DE-U1- 29 606 479
- GB-A- 1 499 815
- US-A- 5 865 329
- US-B1- 6 705 478

## Beschreibung

Die Erfindung betrifft eine manuell betätigbare Schnellverbindung für die Fahrzeugelektrik zwischen einer Zugmaschine und einem daran angehängten Anhängerfahrzeug.

Aus der Praxis sind derartige manuell betätigbare Schnellverbindungen bekannt, mit denen das Anhängerfahrzeug elektrisch mit der Zugmaschine verbunden wird. Zudem ist für die Betätigung der Bremsen bei einem selbst gebremsten Anhängerfahrzeug ein weiterer pneumatischer und/oder hydraulischer Anschluss des Anhängerfahrzeugs an die Zugmaschine erforderlich.

Nachteilig hierbei ist, dass insoweit zwei separate Kuppelvorgänge für den elektrischen Anschluss einerseits und für den pneumatischen/hydraulischen Anschluss andererseits erforderlich sind, was einen erhöhten Arbeitsaufwand und Zeitbedarf bedingt.

Insoweit kann die Schnellverbindung zum einen zwei miteinander verbindbare Schnellverbindungselemente, insbesondere eine Kupplung sowie einen darin einsteckbaren Stecker, und zum anderen eine zwischen einer geöffneten und einer geschlossenen Position veränderbare Verriegelungseinrichtung, umfassen, wobei die Verriegelungseinrichtung in ihrer geschlossenen Position die Schnellverbindungselemente in miteinander verbundenem Zustand arretiert, wobei weiterhin die Schnellverbindungselemente neben den Kontakten der elektrischen Leitungen auch Verbindungselemente für die pneumatische und/oder hydraulische Versorgung des Anhängerfahrzeug umfassen. Hierdurch kann sowohl die elektrische Verbindung als auch die pneumatische und/oder hydraulische Verbindung zwischen Zugmaschine und daran angehängtem Anhängerfahrzeug gemeinsam und mit einem Handgriff hergestellt werden. Ähnliche Systeme beschreiben die gattungsbildenden WO 2005/028220 A und die DE 93 17 302 U1.

Aufgabe der Erfindung ist es insoweit, die vorgenannten Nachteile zu vermeiden und eine Vorrichtung anzugeben, mit der das Herstellen sowohl einer elektrischen als auch einer pneumatischen/hydraulischen Verbindung zwischen Zugmaschine und daran angehängtem Anhängerfahrzeug möglich ist.

Diese Aufgabe wird durch die Schnellverbindung von Anspruch 1 gelöst. Die Schnellverbindung umfasst zum einen zwei miteinander verbindbare Schnellverbindungselemente, insbesondere eine Kupplung sowie einen darin einsteckbaren Stecker, und zum anderen eine zwischen einer geöffneten und einer geschlossenen Position veränderbare Verriegelungseinrichtung, wobei die Verriegelungseinrichtung in ihrer geschlossenen Position die Schnellverbindungselemente in miteinander verbundenem Zustand arretiert, wobei weiterhin die Schnellverbindungselemente neben den Kontakten der elektrischen Leitungen auch Verbindungselemente für die pneumatische und/oder hydraulische Versorgung des Anhängerfahrzeug umfassen. Hierdurch kann sowohl die elektrische Verbindung als auch die pneumatische und/oder hydraulische Verbindung zwischen Zugmaschine und daran angehängtem Anhängerfahrzeug gemeinsam und mit einem Handgriff hergestellt werden.

Die Verriegelungseinrichtung umfasst zumindest ein an dem einen Schnellverbindungselement angeordnetes Arretierelement sowie ein an dem anderen Schnellverbindungselement angeordnetes Betätigungselement zur Ver- oder Entriegelung der Arretierung, so dass ein sicheres Aneinanderhalten der Schnellverbindungselemente gewährleistet ist und in einfacher Art und Weise die Verbindung zwischen den Schnellverbindungselementen hergestellt wird.

Dabei ist das Betätigungselement zur Ver- oder Entriegelung der Arretierung entlang eines Schnellverbindungselements durch einen Schwenkhebel verschiebbar, und ist insbesondere als das Schnellverbindungselement ringförmig umfassende Manschette, formschlüssig mit dem Arretierelement zusammenwirkend ausgebildet, wobei das Arretierelement mittels Betätigung des Schwenkhebels durch Verschieben des Betätigungselements in Richtung des anderen Schnellverbindungselements ziehbar ist und damit die Schnellverbindungselemente aneinander ziehbar sind, so dass das eigentliche Verbinden nicht durch manuelle Führung, sondern aufgrund der Betätigung des Betätigungselementes erfolgt und somit die Gefahr von Beschädigungen verringert wird.

Vorteilhafterweise zumindest ein Schnellverbindungselement an seinem dem anderen Schnellverbindungselement zugewandten Bereich eine Einführhilfe mit sich verjüngendem Zwischenraum, insbesondere einen vorstehenden trichterförmigen Rahmen, aufweisen, so dass das Verbinden der Schnellverbindungselemente besonders schnell und unkompliziert erfolgt und insbesondere Beschädigungen durch unsauberes bzw. verkantetes Aneinanderbringen der Verbindungselemente vermieden werden.

Weiterhin kann zumindest ein Arretierelement als in eine Hinterschneidung des Betätigungselements einhakbarer Arretierhaken ausgebildet sein, so dass in einfacher Art und Weise die Verbindung zwischen den Schnellverbindungselementen vor Betätigung des Betätigungselementes hergestellt werden kann.

Vorteilhafterweise kann das Arretierelement eine bei Überlast versagende Sollbruchstelle aufweisen, so dass bei Überlast eher eine Trennung der Verbindungselemente voneinander erfolgt, als dass die jeweiligen in die Verbindungselemente mündenden Leitungen für die elektrische Versorgung bzw. für die Pneumatik und/oder Hydraulik nicht in Mitleidenschaft gezogen werden.

Vorzugsweise können im Bereich der Kontaktflächen der Schnellverbindungselemente Führungsvorsprünge an dem einem Schnellverbindungselement angeordnet sein und damit korrespondierende Aussparungen in dem anderen Schnellverbindungselement vorgesehen sein, so dass durch diese Führung ein besonders sicheres Aufeinanderzubewegen der Schnellverbindungselemente beim Herstellen der Verbindung gegeben ist und damit die empfindlichen Kontakte vor Fehlbelastungen geschützt werden und sichergestellt wird, dass jeder Kontakt auf dem einen Schnellverbindungselement beim zugehörigen Kontakt auf dem anderen Schnellverbindungselement trifft.

Im Folgenden wird ein in der Zeichnung dargestelltes Ausführungsbeispiel der Erfindung erläutert. Es zeigen:
- Fig. 1: eine erfindungsgemäße Schnellverbindung in geöffneter Position,
- Fig. 2: den Gegenstand nach Fig. 1 in teilgeschnittener Darstellung,
- Fig. 3: den Gegenstand nach Fig. 1 in eingehakter aber noch nicht verriegelter Position und
- Fig. 4: den Gegenstand nach Fig. 1 in verriegelter Position.

In allen Figuren werden für gleiche bzw. gleichartige Bauteile übereinstimmende Bezugszeichen verwendet.

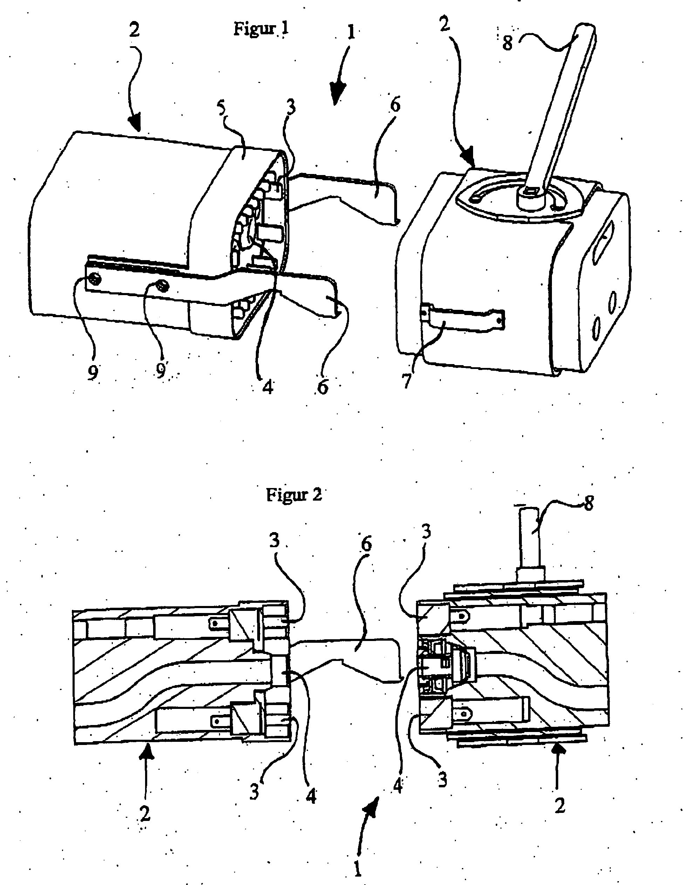

Fig. 1 zeigt eine manuell betätigbare Schnellverbindung 1 mit zwei Schnellverbindungselementen 2.

Die Schnellverbindung 1 dient dazu, eine in der Zeichnung nicht dargestellte Zugmaschine mit einem in der Zeichnung ebenfalls nicht dargestellten, an die Zugmaschine angehängten Anhängerfahrzeug elektrisch und pneumatisch bzw. hydraulisch zu verbinden. Hierzu münden in der Zeichnung ebenfalls nicht dargestellte Leitungen von der Zugmaschine bzw. dem Anhängerfahrzeug in das jeweilige, der Zugmaschine bzw. dem Anhängerfahrzeug zugeordnete Schnellverbindungselement 2.

Wie aus der Zeichnung ersichtlich ist das rechte Schnellverbindungselement, welches beispielsweise der Zugmaschine zugeordnet sein kann, als Stecker ausgebildet, der in das linke Schnellverbindungselement 2, welches als Kupplung ausgebildet ist und dem Anhängerfahrzeug zugeordnet ist, eingesteckt werden kann.

Die Schnellverbindung 1 umfasst darüber hinaus eine Verriegelungseinrichtung, die im dargestellten Ausführungsbeispiel in die Schnellverbindungselemente 2 integriert ist. Wenn die Verriegelungseinrichtung in ihrer geschlossenen Position ist, werden hierdurch die Schnellverbindungselemente 2 in miteinander verbundenem Zustand arretiert. Die Schnellverbindungselemente 2 umfassen sowohl Kontakte 3 für die Verbindung der elektrischen Leitungen als auch Verbindungselemente 4 für die pneumatische und/oder hydraulische Versorgung des Anhängerfahrzeugs.

Das als Kupplung ausgebildete linke Schnellverbindungselement 2 ist an seinem dem anderen Schnellverbindungselement 2 zugewandten Bereich mit einer Einführhilfe versehen, die einen vorstehenden trichterförmigen Rahmen 5 mit sich verjüngendem Zwischenraum aufweist. Das andere Verbindungselement kann ebenfalls sich verjüngend ausgebildet sein, wobei in diesem Fall der Rahmen 5 auch nicht verjüngend ausgebildet sein kann.

Die Verriegelungseinrichtung umfasst ein Arretierelement, das im dargestellten Ausführungsbeispiel durch zwei an dem linken Verbindungselement angebrachte vorstehende Arretierhaken 6 und damit zusammenwirkende an dem rechten Schnellverbindungselement 2 angebrachte Hinterschneidungen 7 gebildet ist.

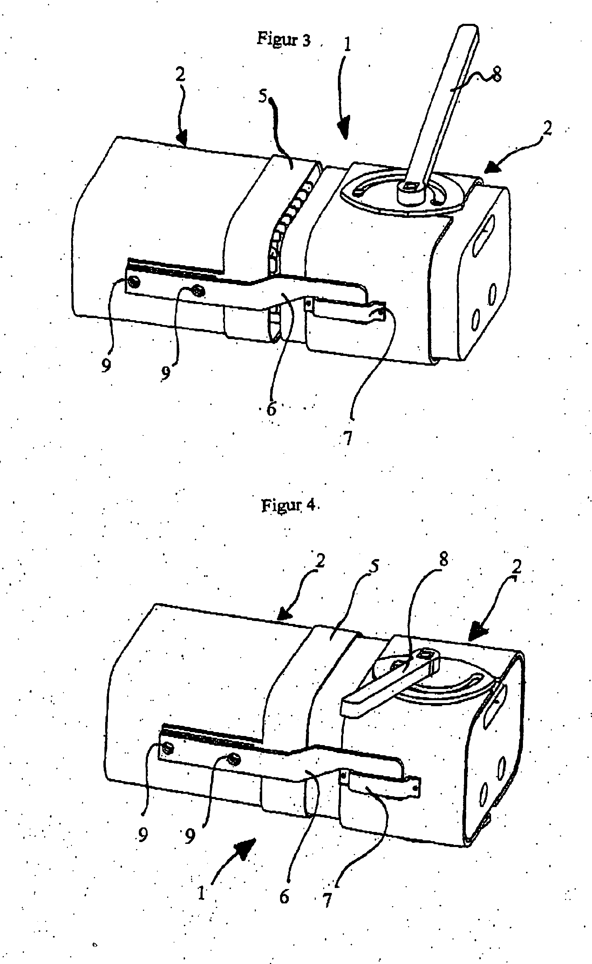

Insoweit werden - wie aus Fig. 3 ersichtlich ist - die Arretierhaken 6 in die Hinterschneidungen 7 des anderen Schnellverbindungselementes 2 eingehakt, wodurch die beiden Schnellverbindungselemente 2 bereits lose miteinander verbunden sind. Eine Verbindung zwischen den elektrischen Kontakten 3 und den Verbindungselementen 4 der Pneumatik und/oder Hydraulik ist in diesem Zustand jedoch nicht gegeben.

Durch ein im dargestellten Ausführungsbeispiel als Schwenkhebel 8 ausgebildetes Betätigungselement kann die Arretierung ver- oder entriegelt werden, wobei mittels Betätigung des Schwenkhebels 8 die Hinterschneidungen 7 auf dem rechten Schnellverbindungselement 2 von dem linken Schnellverbindungselement 2 wegbewegt werden und somit das rechte Schnellverbindungselement 2 und das linke Schnellverbindungselement 2 aufeinander zubewegt werden, bis die Schnellverbindungselemente 2 aneinander anliegen und die elektrischen Kontakte 3 und die Verbindungselemente 4 für Pneumatik und/oder Hydraulik eine Verbindung miteinander haben. Dieser Zustand ist in Fig. 4 dargestellt.

Um die Anschlüsse, die vom Anhängerfahrzeug bzw. der Zugmaschine in das jeweilige Schnellverbindungselement 2 münden, bei einer Überbelastung zu schützen, sind im dargestellten Ausführungsbeispiel als Kunststoffschrauben ausgebildete Befestigungen 9 der Arretierhaken 6 als Sollbruchstelle ausgelegt, die bei Überlast versagt und damit die Verbindung zwischen den Schnellverbindungselementen 2 - trotz verriegeltem Arretierelement - löst bzw. freigibt.

## Patentansprüche

1. Manuell betätigbare Schnellverbindung (1) für die Fahrzeugelektrik zwischen einer Zugmaschine und einem daran angehängten Anhängerfahrzeug, wobei die Schnellverbindung (1) zum einen zwei miteinander verbindbare Schnellverbindungselemente (2), insbesondere eine Kupplung sowie einen darin einsteckbaren Stecker, und zum anderen eine zwischen einer geöffneten und einer geschlossenen Position veränderbare Verriegelungseinrichtung, umfasst, wobei die Verriegelungseinrichtung in ihrer geschlossenen Position die Schnellverbindungselemente (2) in miteinander verbundenem Zustand arretiert, wobei weiterhin die Schnellverbindungselemente (2) neben den Kontakten (3) der elektrischen Leitungen auch Verbindungselemente (4) für die pneumatische und/oder hydraulische Versorgung des Anhängerfahrzeug umfassen, wobei die Verriegelungseinrichtung zumindest ein an dem einen Schnellverbindungselement (2) angeordnetes Arretierelement (6) sowie ein an dem anderen Schnellverbindungselement (2) angeordnetes Betätigungselement (7) zur Ver- oder Entriegelung der Arretierung umfasst, **dadurch gekennzeichnet, dass** das Betätigungselement (7) zur Ver- oder Entriegelung der Arretierung entlang eines Schnellverbindungselements (2) durch einen Schwenkhebel (8) verschiebbar, insbesondere als das Schnellverbindungselement (2) ringförmig umfassende Manschette, formschlüssig mit dem Arretierelement (6) zusammenwirkend ausgebildet ist, wobei das Arretierelement (6) mittels Betätigung des Schwenkhebels (8) durch Verschieben des Betätigungselements in Richtung des anderen Schnellverbindungselements (2) ziehbar ist und damit die Schnellverbindungselemente (2) aneinander ziehbar sind (ursprünglicher Anspruch 4).

2. Schnellverbindung (1) nach dem vorhergehenden Anspruch, **dadurch gekennzeichnet, dass** zumindest ein Schnellverbindungselement (2) an seinem dem anderen Schnellverbindungselement (2) zugewandten Bereich eine Einführhilfe mit sich verjüngendem Zwischenraum, insbesondere einen vorstehenden trichterförmigen Rahmen (5), aufweist.

3. Schnellverbindung (1) nach einem der vorhergehenden Ansprüche, **dadurch gekennzeichnet, dass** zumindest ein Arretierelement als in eine Hinterschneidung (7) des Betätigungselements einhakbarer Arretierhaken (6) ausgebildet ist.

4. Schnellverbindung (1) nach einem der vorhergehenden Ansprüche, **dadurch gekennzeichnet, dass** das Arretierelement eine bei Überlast versagende Sollbruchstelle aufweist.

5. Schnellverbindung (1) nach einem der vorhergehenden Ansprüche, **dadurch gekennzeichnet, dass** im Bereich der Kontaktflächen der Schnellverbindungselemente (2) Führungsvorsprünge an dem einen Schnellverbindungselement (2) angeordnet sind und damit korrespondierende Aussparungen in dem anderen Schnellverbindungselement (2) vorgesehen sind.

## Claims

1. Manually actuatable rapid connection (1) for the vehicle electrics between a towing vehicle and a towed vehicle attached thereto, wherein the rapid connection (1) includes, on the one hand, two interconnectable rapid connecting elements (2), in particular a coupling as well as a plug-in connector that is insertable therein, and, on the other hand, a locking device that is alterable between an open and a closed position, wherein, in its closed position, the locking device arrests the rapid connecting elements (2) in the interconnected state, wherein, apart from the contacts (3) of the electric lines, the rapid connecting elements (2) additionally also include connecting elements (4) for the pneumatic and/or hydraulic supply of the towed vehicle, wherein the locking device includes at least one arresting element (6) positioned at the one rapid connecting element (2) as well as an actuating element (7) positioned at the other rapid connecting element (2) for locking or unlocking the catch, **characterized in that** for locking and unlocking the catch, the actuating element (7) is displaceable along a rapid connecting element (2) by means of a pivoted lever (8), in particular is realized as a sleeve enveloping the rapid connecting element (2) in a ring-shaped manner, interacting in a positive locking manner with the arresting element (6), wherein the arresting element (6) is drawable in the direction of the other rapid connecting element (2) by actuating the pivoted lever (8) by displacing the actuating element and consequently the rapid connecting elements (2) are drawable towards one another.

2. Rapid connection (1) according to the preceding claim, **characterized in that** at its region facing the other rapid connecting element (2), at least one rapid connecting element (2) has an insertion aid with tapering clearance, in particular a protruding funnel-shaped frame (5).

3. Rapid connection (1) according to one of the preceding Claims, **characterized in that** at least one arresting element is realized as an arresting hook (6) that is hookable into an undercut (7) of the actuating element.

4. Rapid connection (1) according to one of the preceding Claims, **characterized in that** the arresting element has a predetermined breaking point which will fail on overload.

5. Rapid connection (1) according to one of the preceding Claims, **characterized in that** in the region of the contact faces of the rapid connecting elements (2) guide projections are disposed on the one rapid connecting element (2) and consequently corresponding recesses are provided in the other rapid connecting element (2).

## Revendications

1. Elément de raccordement rapide (1) actionnable manuellement, destiné au circuit électrique entre un tracteur et une remorque attelée à ce dernier, ledit élément de raccordement rapide (1) comprenant, d'une part, deux éléments de connexion rapide (2) pouvant être raccordés l'un à l'autre et revêtant notamment la forme d'un accouplement, ainsi que d'une fiche pouvant être emboîtée dans celui-ci et, d'autre part, un dispositif de verrouillage pouvant être déplacé d'une position ouverte à une position fermée, sachant que, dans sa position fermée, ledit dispositif de verrouillage arrête les éléments de connexion rapide (2) à l'état mutuellement relié ; sachant que lesdits éléments de connexion rapide (2) présentent également par ailleurs, outre les contacts (3) des conducteurs électriques, des éléments de liaison (4) affectés à l'alimentation pneumatique et/ou hydraulique de la remorque ; sachant que ledit dispositif de verrouillage englobe au moins un élément d'arrêt (6) situé sur l'un des éléments de connexion rapide (2), ainsi qu'un élément d'actionnement (7) qui est situé sur l'autre élément de connexion rapide (2) et est dédié au verrouillage ou au déverrouillage de l'arrêt, **caractérisé par le fait que**, en vue du verrouillage ou du déverrouillage de l'arrêt, ledit élément d'actionnement (7) est de réalisation coulissante le long d'un élément de connexion rapide (2), sous l'action d'un levier pivotant (8), en coopération par concordance de formes avec l'élément d'arrêt (6), notamment à la manière d'un manchon ceinturant annulairement ledit élément de connexion rapide (2), ledit élément d'arrêt (6) pouvant être tiré par actionnement dudit levier pivotant (8), suite à un coulissement de l'élément d'actionnement en direction de l'autre élément de connexion rapide (2), de sorte que les éléments de connexion rapide (2) peuvent être tirés l'un contre l'autre.

2. Elément de raccordement rapide (1) selon la revendication précédente, **caractérisé par le fait qu'**au moins un élément de connexion rapide (2) présente, dans sa région tournée vers l'autre élément de connexion rapide (2), un auxiliaire d'insertion à espace interstitiel se rétrécissant, notamment un cadre infundibuliforme saillant (5).

3. Elément de raccordement rapide (1) selon l'une des revendications précédentes, **caractérisé par le fait qu'**au moins un élément d'arrêt est réalisé sous la forme d'un crochet d'arrêt (6) pouvant être accroché dans une contre-dépouille (7) de l'élément d'actionnement.

4. Elément de raccordement rapide (1) selon l'une des revendications précédentes, **caractérisé par le fait que** l'élément d'arrêt comporte une zone de rupture par destination, cédant en cas de charge excessive.

5. Elément de raccordement rapide (1) selon l'une des revendications précédentes, **caractérisé par le fait que** des protubérances de guidage sont disposées sur l'un des éléments de connexion rapide (2), dans la région des surfaces de contact des éléments de connexion rapide (2), et des évidements complémentaires sont prévus sur l'autre élément de connexion rapide (2).
